# EUROPEAN PATENT APPLICATION

(11) **EP 4 717 957 A1**
(43) Date of publication of application: **01.04.2026**
(21) Application number: 24810262.6
(22) Date of filing: 14.05.2024
(51) Int. Cl.: F16K 31/06, F16K 1/00

(54) **VALVE APPARATUS**

(30) Priority: 22.05.2023 CN 202310591147
(71) Applicant: Zhejiang Sanhua Intelligent Controls Co.,Ltd, Shaoxing, Zhejiang 312500 (CN)
(72) Inventor: FAN, Haoli, Shaoxing, Zhejiang 312500 (CN)
(74) Representative: Maikowski & Ninnemann Patentanwälte Partnerschaft mbB
(86) International application number: PCT/CN2024/093010
(87) International publication number: WO 2024/240015

(57) **Abstract**

A valve apparatus, comprising a movable core, a static core and a spring, wherein the movable core is provided with a first mounting hole part, and the first mounting hole part comprises a first hole wall and a first bottom wall; the static core is provided with a second mounting hole part facing the movable core, and the second mounting hole part comprises a second hole wall and a second bottom wall; and the spring comprises a first abutting part, a second abutting part and an elastic part, the outer diameter of the first abutting part is approximately the same as the inner diameter of the first hole wall, the first abutting part abuts against the first bottom wall, the outer diameter of the second abutting part is approximately the same as the inner diameter of the second hole wall, the second abutting part abuts against the second bottom wall, the elastic part forms part of the spring between the first abutting part and the second abutting part, the diameter of the first abutting part is greater than that of the elastic part, and the diameter of the second abutting part is greater than that of the elastic part. The valve apparatus can relatively decrease deflection of the spring and relatively decrease wear and tear of the spring during use, thereby prolonging the service life of the spring.

## Description

The present application claims priority to Chinese Patent Application No. 202310591147.1, titled "VALVE APPARATUS", filed on May 22, 2023 with the China National Intellectual Property Administration, which is incorporated herein by reference in its entirety.

### FIELD

The present application relates to the technical field of valve equipment, and in particular to a valve apparatus.

### BACKGROUND

As a typical valve apparatus, a solenoid valve includes a movable core and a static core. The movable core and the static core are respectively provided with mounting holes facing each other. A spring is disposed between the movable core and the static core, and both ends of the spring are located in the respective mounting holes. The movable core can move in an axial direction relative to the static core, so as to compress and release the spring.

Spring misalignment may easily occur during the compression and release processes of the spring, generating frictions between an outer wall of the spring and inner walls of the mounting holes, which leads to the wear of the spring and affects its service life.

### SUMMARY

An object of the present application is to provide a valve apparatus, which can reduce the likelihood of spring skewing, thereby reducing the wear of the spring during use and prolonging its service life.

In order to address the above technical issues, a valve apparatus is provided according to the present application, including a movable core, a static core, and a spring. The movable core is provided with a first mounting hole portion, and the first mounting hole portion includes a first hole wall and a first bottom wall. The static core is provided with a second mounting hole portion facing the movable core, and the second mounting hole portion includes a second hole wall and a second bottom wall.

The spring includes a first abutment portion, a second abutment portion, and an elastic portion. An outer diameter of the first abutment portion is substantially the same as an inner diameter of the first hole wall, and the first abutment portion abuts against the first bottom wall. An outer diameter of the second abutment portion is substantially the same as an inner diameter of the second hole wall, and the second abutment portion abuts against the second bottom wall. The elastic portion is a part of the spring between the first abutment portion and the second abutment portion. The first abutment portion has a diameter greater than a diameter of the elastic portion, and the second abutment portion has a diameter greater than the diameter of the elastic portion.

In the valve apparatus according to the present application, the outer diameter of the first abutment portion is substantially the same as the inner diameter of the first hole wall of the first mounting hole portion, and the outer diameter of the second abutment portion is substantially the same as the inner diameter of the second hole wall of the second mounting hole portion, so that the position of the spring is ensured to be stable in a radial direction of the first mounting hole portion and the second mounting hole portion during the compression or release of the spring, thereby reducing the occurrence of spring misalignment. Moreover, the diameter of the first abutment portion is greater than a diameter of the elastic portion, and the diameter of the second abutment portion is also greater than the diameter of the elastic portion, so that there is a space between the elastic portion and each of the first mounting hole portion and the second mounting hole portion. This space accommodates spring deformation, which can reduce the friction between the spring and the mounting hole portion during its operation.

### BRIEF DESCRIPTION OF THE DRAWINGS

FIG. 1 is a schematic structural view of a valve apparatus according to an embodiment of the present application;
FIG. 2 is an enlarged view of part A in FIG. 1;
FIG. 3 is an enlarged view of part B in FIG. 1;
FIG. 4 is a schematic structural view of a spring in FIG. 1;
FIG. 5 is a schematic structural view of a movable core in FIG. 1 in a mounted state;
FIG. 6 is a schematic structural view of the movable core in FIG. 5;
FIG. 7 is a schematic structural view of a guide ring in FIG. 5;
FIG. 8 is a schematic structural view of a seal in FIG. 5;
FIG. 9 is a schematic structural view of a static core in FIG. 1; and
FIG. 10 is a schematic structural view of a sleeve in FIG. 1.

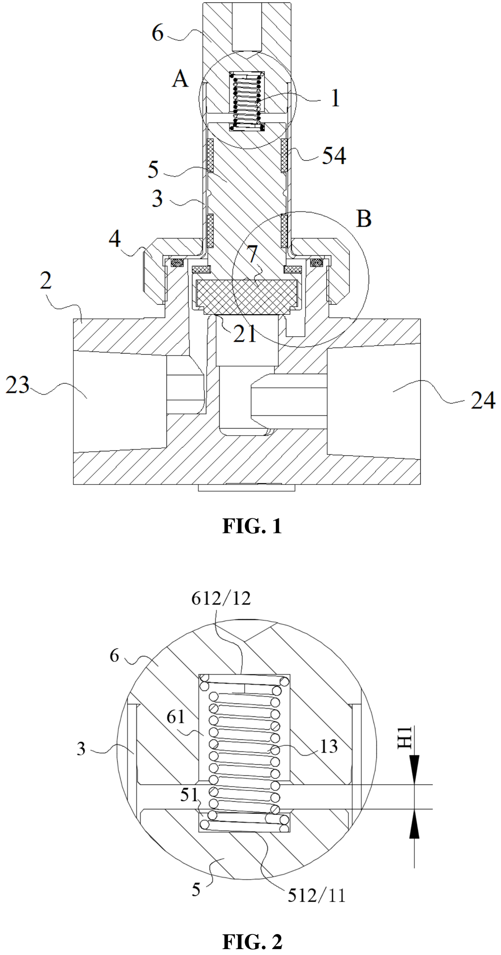

Reference numerals in FIGS. 1 to 10 are as follows:

| | | | |
|---|---|---|---|
| 1. | spring; | 11. | first abutment portion; |
| 12. | second abutment portion; | 13. | elastic portion; |
| 14. | first diameter-changing portion; | 15. | second diameter-changing portion; |
| 2. | valve seat; | 21. | valve port portion; |
| 22. | connector; | 23. | inlet end; |
| 24. | outlet end; | 3. | sleeve; |
| 31. | fixing flange; | 4. | connection nut, |
| 41. | main body portion; | 42. | cooperation portion; |
| 5. | movable core; | 51. | first mounting hole portion; |
| 511. | first hole wall; | 512. | first bottom wall; |
| 52. | limiting portion; | 53. | buffer pad; |
| 54. | guide ring; | 541. | gas flow channel; |
| 55. | first mounting groove; | 56. | annular groove; |
| 57. | second mounting groove; | 571. | groove wall; |
| 572. | rim; | 6. | static core; |
| 61. | second mounting hole portion; | 611. | second hole wall; |
| 612. | second bottom wall; | 7. | seal; |
| 71. | lower end face; | 72. | stepped structure; |
| 721. | stepped surface; | 8. | annular sealing ring. |

### DETAILED DESCRIPTION OF THE EMBODIMENTS

In order to enable those skilled in the art to better understand the technical solution of the present application, the present application is further described in detail below in conjunction with the accompanying drawings and specific embodiments.

A valve apparatus is provided according to an embodiment of the present application. As shown in FIG. 1, the valve apparatus includes a valve seat 2, a sleeve 3, a connection nut 4, a movable core 5, a static core 6, and other components.

As shown in FIG. 1, the valve seat 2 is provided with a valve port portion 21, a connector 22, an inlet end 23, and an outlet end 24. The sleeve 3 is fixed to the valve seat 2 via the connection nut 4. Specifically, a fixing flange 31, which extends outward and circumferentially, is provided at an end of the sleeve 3 facing the valve seat 2. The connection nut 4 includes a main body portion 41 and a cooperation portion 42. The main body portion 41 can be threadedly engaged with the connector 22. When the main body portion 41 is in threaded engagement with the connector 22, the cooperation portion 42 can abut against an end portion of the connector 22, so that the fixing flange 31 is clamped between the cooperation portion 42 and the connector 22, thereby realizing the fixation between the sleeve 3 and the valve seat 2.

The static core 6 is fixed to a side of the sleeve 3 away from the valve seat 2. The seal 7 is fixed to the movable core 5. The movable core 5 is slidably arranged in the sleeve 3. The movable core 5 can drive the seal 7 to slide in the sleeve 3, so that a lower end face 71 of the seal 7 is engaged with or disengaged from the valve port portion 21. When the lower end face 71 of the seal 7 is engaged with the valve port portion 21, the valve port portion 21 is blocked, and the inlet end 23 is not in communication with the outlet end 24. At this time, the valve apparatus is in a closed state. When the lower end face 71 of the seal 7 is disengaged from the valve port portion 21, the valve port portion 21 is opened, and the inlet end 23 is in communication with the outlet end 24. At this time, the valve apparatus is in an open state.

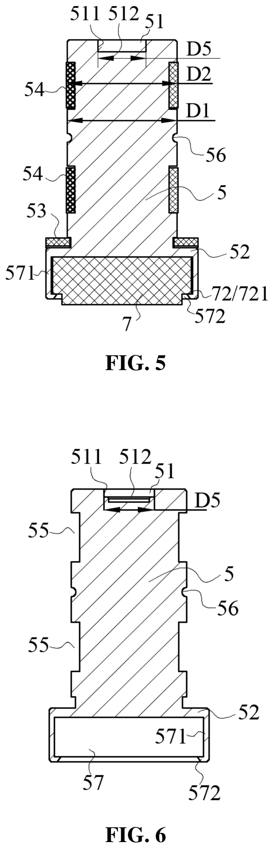

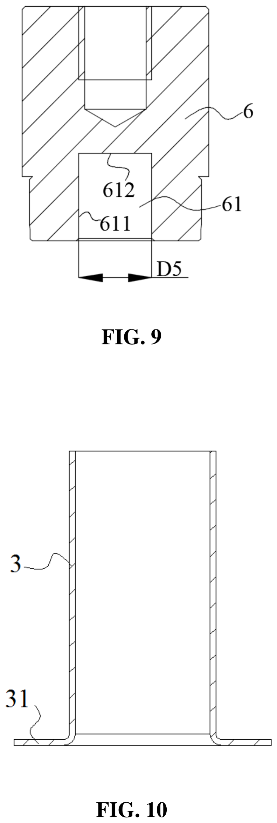

As shown in FIGS. 5 and 6, a first mounting hole portion 51 is provided at a top end of the movable core 5 (i.e., an end of the movable core 5 facing the static core 6). The first mounting hole portion 51 includes a first hole wall 511 and a first bottom wall 512. As shown in FIG. 9, a second mounting hole portion 61 is provided at a bottom end of the static core 6 (i.e., an end of the static core 6 facing the movable core 5). The second mounting hole portion 61 includes a second hole wall 611 and a second bottom wall 612. As shown in FIG. 2, a spring 1 is arranged between the movable core 5 and the static core 6, and both ends of the spring 1 are located in the first mounting hole portion 51 and the second mounting hole portion 61, respectively.

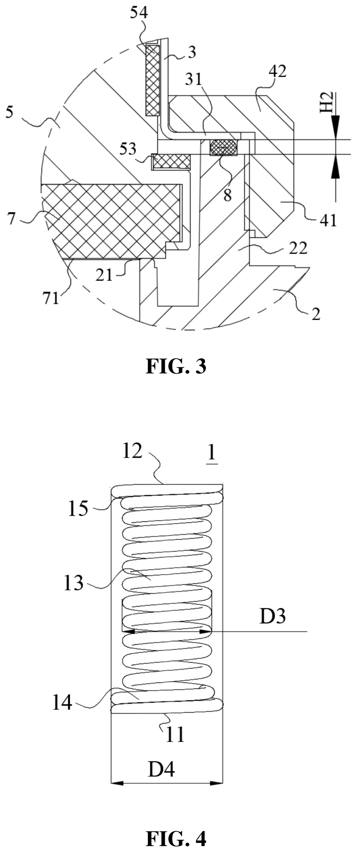

Specifically, as shown in FIG. 4, the spring 1 includes a first abutment portion 11, a second abutment portion 12, and an elastic portion 13 distributed in an axial direction. The elastic portion 13 is a part of the spring 1 located between the first abutment portion 11 and the second abutment portion 12. In a mounted state, as shown in FIG. 2, the first abutment portion 11 is located in the first mounting hole portion 51 and abuts against the first bottom wall 511, and the second abutment portion 12 is located in the second mounting hole 61 and abuts against the second bottom wall 612. In other words, the spring 1 is clamped between the first bottom wall 512 and the second bottom wall 612. This arrangement ensures the position of the spring 1 to be stable in an axial direction of the first mounting hole portion 51 and the second mounting hole portion 61 during the compression or release process of the spring 1.

Moreover, an outer diameter of the first abutment portion 11 is substantially the same as an inner diameter of the first hole wall 511, and an outer diameter of the second abutment portion 12 is substantially the same as an inner diameter of the second hole wall 611. Such an arrangement ensures that the position of the spring 1 is stable in a radial direction of the first mounting hole portion 51 and the second mounting hole portion 61 during the compression or release process of the spring 1, thereby reducing the skewing of the spring 1, minimizing the friction and wear between an outer wall of the spring 1 and each of the first hole wall 511 and the second hole wall 611, and extending the service life of the spring 1.

The diameter of the first abutment portion 11 is greater than the diameter of the elastic portion 13, and the diameter of the second abutment portion 12 is also greater than the diameter of the elastic portion 13. With this arrangement, the spring 1 has a structure with greater diameters at both ends and a smaller diameter in the middle. In the mounted state, the both ends of the spring 1 (i.e., the two abutment portions) are in clearance fit with inner walls of the respective mounting hole portions with a small clearance therebetween, while the elastic portion 13 is in clearance fit with the inner walls of the mounting hole portions with a large clearance therebetween. There is a space between the elastic portion 13 and each of the first mounting hole portion 51 and the second mounting hole portion 61, allowing the spring 1 to deform, which can reduce the friction between the spring 1 and each of the first mounting hole portion 51 and the second mounting hole portion 61 during its operation, thereby prolonging the service life of the spring 1 and ensuring reliability.

In this embodiment, the inner diameter of the first hole wall 511 and the inner diameter of the second hole wall 611 may be identical or different, and the outer diameter of the first abutment portion 11 and the outer diameter of the second abutment portion 12 may be identical or different, which are not limited herein.

In an example, the inner diameter of the first hole wall 511 and the inner diameter of the second hole wall 611 are the same and are both denoted as D5 (as shown in FIGS. 5, 6, and 9), and the outer diameter of the first abutment portion 11 and the outer diameter of the second abutment portion 12 are the same and are both denoted as D4 (as shown in FIG. 4). An outer diameter of the elastic portion 13 is denoted as D3. It can be easily understood that D5>D4>D3. Therefore, when the spring 1 is in the mounted state, there is a first preset clearance L1=D5-D4 between the first abutment portion 11 and the first hole wall 511, and there is a second preset clearance L2=D5-D3 between the second abutment portion 12 and the second hole wall 611. Obviously, the first preset clearance L1 is less than the second preset clearance L2. In this way, the friction and wear between the elastic portion 13 and each of the first hole wall 511 and the second hole wall 611 can be reduced, thereby prolonging the service life of the spring 1.

Specifically, in this embodiment, the first preset clearance L1 is less than or equal to 0.1 mm, and the second preset clearance L2 is less than or equal to 0.1 mm. That is to say, the difference between the outer diameter of the first abutment portion 11 and the inner diameter of the first hole wall 511 is less than or equal to 0.1 mm, and the difference between the outer diameter of the second abutment portion 12 and the inner diameter of the second hole wall 611 is less than or equal to 0.1 mm. This arrangement ensures that the position of the spring 1 is stable in the radial direction of the first mounting hole portion 51 and the second mounting hole portion 61 during its compression or release process, thereby making the misalignment of the spring 1 less likely to occur.

The spring 1 includes a first diameter-changing portion 14 and a second diameter-changing portion 15. As shown in FIG. 4, the elastic portion 13 is located between the first diameter-changing portion 14 and the second diameter-changing portion 15. An end of the first diameter-changing portion 14 (the end on a side of the first diameter-changing portion 14 away from the elastic portion 13) forms the first abutment portion 11, and an end of the second diameter-changing portion 15 (the end on a side of the second diameter-changing portion 15 away from the elastic portion 13) forms the second abutment portion 12.

It can be easily understood that the diameter of each of the diameter-changing portions (including the first diameter-changing portion 14 and the second diameter-changing portion 15) varies. The diameter of one part of the first diameter-changing portion 14 away from the elastic portion 13 is greater than that of the other part of the first diameter-changing portion 14 close to the elastic portion 13. The diameter of one part of the second diameter-changing portion 15 away from the elastic portion 13 is greater than that of the other part of the second diameter-changing portion 15 close to the elastic portion 13. Each diameter-changing portion functions as a transition between the respective abutment portion and the elastic portion 13, which have different diameters, so that the forming process of the spring 1 can be simplified.

The spring 1 is a cylindrical helical spring, which is specifically formed by helically winding a single metal wire into multiple turns, and the forming process is simple. Each turn formed by the helical winding forms an individual winding portion. Each of the first diameter-changing portion 14, the second diameter-changing portion 15, and the elastic portion 13 is composed of multiple winding portions.

The winding portions of the first diameter-changing portion 14 have 2.5 to 3 turns, and the winding portions of the second diameter-changing portion 15 have 2.5 to 3 turns. This arrangement can simplify the forming process while ensuring the stability of both ends of the spring 1 during the extension and compression process. Specifically, the number of winding portions of the first diameter-changing portion 14 and the number of winding portions of the second diameter-changing portion 15 may be identical or different, which is not limited herein.

Specifically, during the winding process of the metal wire, each abutment portion with an outer diameter of D5 may include only one turn. At the beginning of the second turn, the wound metal wire still maintains a diameter of D5. As winding continues, the outer diameter of the wound metal wire gradually decreases, and is reduced to D3 when 2.5 to 3 turns have been formed. Subsequently, the elastic portion with an outer diameter of D3 is formed by continuously winding the metal wire. The winding process proceeds until the abutment portion at the other end is completed.

The multiple winding portions of the first diameter-changing portion 14 are arranged sequentially and closely along the axial direction of the spring 1, and the multiple winding portions of the second diameter-changing portion 15 are arranged sequentially and closely along the axial direction of the spring 1. In this case, the winding portions arranged closely exhibit no elasticity in the axial direction. A gap is present between every two adjacent winding portions of the elastic portion 13, and the elastic portion 13 is elastic in the axial direction. With the close arrangement of the winding portions of the diameter-changing portions located in the respective mounting hole portions, the stability of the diameter-changing portions in the axial direction can be ensured, and the outer diameter of the diameter-changing portions will not change during the compression and release processes of the spring 1. Since there is no relative movement between each abutment portion and the bottom wall of the respective mounting hole portion, there is no sliding friction between them, which reduces the wear of the spring 1, thereby prolonging the service life of the spring 1.

Alternatively, in this embodiment, a preset spacing may be provided between every two adjacent winding portions of the first diameter-changing portion 14, and a preset spacing may be provided between every two adjacent winding portions of the second diameter-changing portion 15. In this case, the winding portions of each diameter-changing portion are not closely arranged, and the two diameter-changing portions and the elastic portion 13 have elasticity in the axial direction, so that the spring 1 is ensured to have sufficient elastic force. In this embodiment, there is no specific limitation on the above preset spacing.

In this embodiment, the preset spacing between the every two adjacent winding portions of the first diameter-changing portion 14 is smaller than a spacing between every two adjacent winding portions of the elastic portion 13. The preset spacing between the every two adjacent winding portions of the second diameter-changing portion 15 is smaller than the spacing between the every two adjacent winding portions of the elastic portion 13. With this arrangement, during the compression and release processes of the spring 1, the elastic portion 13 is more easily deformed than the first diameter-changing portion 14 and the second diameter-changing portion 15, which ensures the stability of the first diameter-changing portion 14 and the second diameter-changing portion 15 in the axial direction, and reduces the friction between the spring 1 and the inner walls of the mounting hole portions, prolonging the service life of the spring.

As shown in FIGS. 5 and 6, a limiting portion 52 is provided at a bottom end of the movable core 5. The limiting portion 52 has a diameter greater than an inner diameter of the sleeve 3, so that the movable core 5 can move upward in an axial direction of the sleeve 3 until an upper end face of the limiting portion 52 abuts against a lower end face of the sleeve 3, so as to limit the movement of the movable core 5 at the bottom of the sleeve 3.

As shown in FIGS. 1 to 3, when the lower end face 71 of the seal 7 is in contact with the valve port portion 21, a distance between an upper end face of the movable core 5 and a lower end face of the static core 6 is defined as a first distance H1. At this time, a distance between the upper end face of the limiting portion 52 and the lower end face of the sleeve 3 is defined as a second distance H2. The first distance H1 and the second distance H2 satisfy H1>H2. With such an arrangement, when the movable core 5 moves upward until the limiting portion 52 abuts against the sleeve 3, there is still a gap (H1-H2) between the upper end face of the movable core 5 and the lower end face of the static core 6 without contact.

If the first distance H1 is equal to or smaller than the second distance H2, the movable core 5 will inevitably come into contact with the static core 6 after energization. Then, after de-energization, the remanence of the movable core 5 and the static core 6 will be large. In addition, the DC solenoid valve typically has large remanence. These factors necessitate a strong spring force to overcome the residual magnetic force. As the spring force increases, a greater electromagnetic force is required to overcome the spring force to open the valve. Therefore, in this embodiment, H1 is greater than H2, so that the movable core 5 does not come into contact with the static core 6 after energization, and the remanence of the movable core 5 and the static core 6 after de-energization can be reduced, thereby reducing the requirements for the spring 1 and the electromagnetic force.

Further, as shown in FIGS. 3 and 5, a buffer pad 53 is further provided on the upper end face of the limiting portion 52. In this case, the second distance H2 is the gap between an upper end face of the buffer pad 53 and the lower end face of the sleeve 3. The provision of the buffer pad 53 provides a buffering effect between the limiting portion 52 and the sleeve 3 when the valve apparatus is opened, so as to prevent the limiting portion 52 from directly colliding with the sleeve 3 to generate sounds, thereby achieving a noise reduction effect. Moreover, the buffer pad 53 can also prevent the limiting portion 52 or the sleeve 3 from being damaged due to collision, thereby extending the service life.

As shown in FIG. 5, a guide ring 54 is further arranged circumferentially on an outer wall of the movable core 5. There is a gap between the outer wall of the movable core 5 and the inner wall of the sleeve 3. An outer wall of the guide ring 54 is in sliding fit with the inner wall of the sleeve 3. That is to say, the outer diameter D2 of the guide ring 54 is greater than the outer diameter D1 of the movable core 5. When the movable core 5 moves up and down in the axial direction of the sleeve 3, there is no contact between the outer wall of the movable core 5 and the inner wall of the sleeve 3. Instead, the guide ring 54 is in contact with the inner wall of the sleeve 3, which can reduce the contact area, thereby reducing the friction resistance and prolonging the service life of the valve apparatus.

Moreover, a side wall of the guide ring 54 is further provided with a gas flow channel 541 running through the guide ring 54 in the axial direction. When the valve apparatus is in the open state and needs to be closed, a coil is de-energized, and a gas flows from the inlet end 23 into the space between the movable core 5 and the static core 6 through the gap between the movable core 5 and the sleeve 3 and through the gas flow channel 541 of the guide ring 54, increasing the air pressure in this space. The air pressure acts on the movable core 5, and the air pressure above the movable core 5 is equal to that at the inlet end 23. Meanwhile, since the valve port portion 21 is still open, the air pressure below the seal 7 is lower than that at the inlet end 23. As a result, under the pressure differential, the seal 7 moves downward to close the valve port portion 21.

Therefore, the provision of the gas flow channel 541 can reduce the requirement for the restoring force of the spring 1, and further reduce the requirement for the electromagnetic force during the opening and closing processes of the valve apparatus.

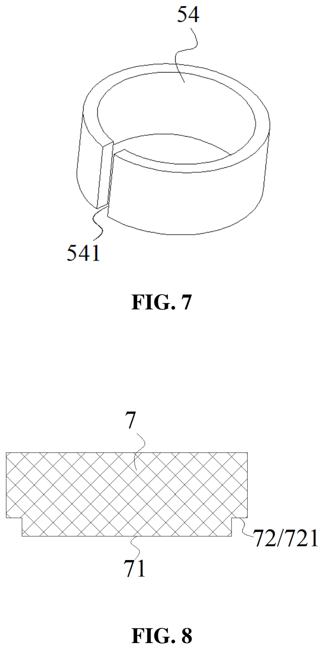

Further, in the present embodiment, there is no limitation on the specific structure of the gas flow channel 541. As shown in FIG. 7, the side wall of the guide ring 54 is provided with a gap extending in the axial direction, and the gap forms the gas flow channel 541. Alternatively, the side wall of the guide ring 54 may be provided with a groove running through the guide ring 54 in the axial direction, and the groove forms the gas flow channel 541. The provision of the gap can simplify the overall structure, facilitate processing, and facilitate the assembly operation between the guide ring 54 and the movable core 5.

Specifically, in this embodiment, there is no limitation on the number of the guide ring 54. For example, two guide rings 54 may be distributed along the axial direction of the movable core 5 and are spaced apart from each other, as shown in FIG. 5. Alternatively, there may be one, three or more guide rings 54.

As shown in FIG. 6, the outer wall of the movable core 5 is provided with a first mounting groove 55 extending in the circumferential direction. The first mounting groove 55 is used for mounting the guide ring 54, ensuring that the position of the guide ring 54 is stable when the movable core 5 moves in the axial direction of the sleeve 3.

As shown in FIGS. 5 and 6, the outer wall of the movable core 5 is further provided with an annular groove 56 extending in the circumferential direction. A gas can flow through the gap between the movable core 5 and the inner wall of the sleeve 3 in the axial direction, and impurities in the gas can accumulate in the annular groove 56, so as to prevent the impurities from causing damages to the movable core 5, the static core 6, the guide ring 54 and the like, and even causing the spring 1 to get stuck.

As shown in FIGS. 5 and 6, the lower end face of the movable core 5 is further provided with a second mounting groove 57, which is used for mounting the seal 7. Specifically, a groove wall 571 at an opening end of the second mounting groove 57 is provided with a rim 572 extending inward in a radial direction. When the seal 7 is placed in the second mounting groove 57, the rim 572 abuts against a bottom wall of the seal 7 to prevent the seal 7 from being separated from the second mounting groove 57, thereby ensuring the mounting stability of the seal 7. Specifically, an outer edge of the seal 7 may be in clearance fit with an inner wall of the second mounting groove 57 with a small clearance therebetween to facilitate mounting and dismounting operations.

Alternatively, the seal 7 may be fixed to the lower end face of the movable core 5 by adhesive bonding. Alternatively, the seal 7 may be adhered to the second mounting groove 57 by adhesive, or it may be press-fitted into the second mounting groove 57 to be in interference fit with the second mounting groove 57. The rim 572 is provided at the opening of the second mounting groove 57 to limit the position of the seal 7. This can not only ensure the mounting stability of the seal 7, but also facilitate the mounting and dismounting operations of the seal 7.

A stepped structure 72 may be provided at a bottom of the seal 7, as shown in FIG. 8. The rim 572 may abut against a stepped surface 721 of the stepped structure 72.

As shown in FIG. 10, the fixing flange 31 has an annular structure. That is to say, a bottom end of the sleeve 3 is flanged outward to form an annular structure extending in the circumferential direction, which forms the fixing flange 31. An annular sealing ring 8 is sandwiched between the fixing flange 31 and the connector 22 in the circumferential direction to ensure the sealing effect at the connection between the sleeve 3 and the connector.

The valve apparatus further includes a coil. The inlet end 23 of the valve seat 2 is in communication with a high-pressure gas, and the outlet end 24 of the valve seat 2 is in communication with the atmosphere. The high-pressure gas enters from the inlet end 23 and flows into a chamber above the movable core 5 through the gap between the sleeve 3 and the movable core 5, and also through the gas flow channel 541. Under the pressure of the high-pressure gas and the elastic force of the spring 1, the movable core 5 moves downward along the sleeve 3, and drives the seal 7 to move until the seal 7 comes into contact with the valve port portion 21, thereby sealing the valve port portion 21. When the coil is energized, a magnetic field forms around the coil. Under the action of the electromagnetic force, the movable core 5 overcomes the elastic force of the spring 1 and moves upward, driving the seal 7 to move upward and be disengaged from the valve port portion 21, and therefore the valve port portion 21 is opened. Furthermore, as the movable core 5 moves upward, the gas between the movable core 5 and the static core 6 can be expelled downward through the gap between the movable core 5 and the sleeve 3, and also through the gas flow channel 541, and the gas pressure above the movable core 5 decreases. When the movable core 5 moves upward until the upper end face of the buffer pad 53 abuts against the lower end face of the sleeve 3, the valve port portion 21 is opened to the maximum extent.

When the coil is de-energized, the magnetic field formed around the coil disappears, and the movable core 5 moves downward under a restoring force of the spring 1. When the seal 7 comes into contact with the valve port portion 21, the valve port portion 21 is closed, so that the inlet end 23 is not in communication with the outlet end 24. In this case, the gas entering through the inlet end 23 will flow upward through the gap between the movable core 5 and the sleeve 3 and through the gas flow channel 541, and enters the space between the movable core 5 and the static core 6. The movable core 5 moves downward more quickly under the action of the spring 1 and the gas pressure. When the lower end face 71 of the seal 7 comes into contact with the valve port portion 21, the valve apparatus is in a closed state.

Preferred embodiments of the present application are described above. It should be pointed out that for those skilled in the art, several improvements and modifications can be made without departing from the principles of the present application. These improvements and modifications should also fall within the protection scope of the present application.

## Claims

1. A valve apparatus, comprising:
a movable core;
a static core; and
a spring, wherein
the movable core is provided with a first mounting hole portion, and the first mounting hole portion comprises a first hole wall and a first bottom wall;
the static core is provided with a second mounting hole portion facing the movable core, and the second mounting hole portion comprises a second hole wall and a second bottom wall;
the spring comprises a first abutment portion, a second abutment portion, and an elastic portion;
an outer diameter of the first abutment portion is substantially the same as an inner diameter of the first hole wall, and the first abutment portion abuts against the first bottom wall;
an outer diameter of the second abutment portion is substantially the same as an inner diameter of the second hole wall, and the second abutment portion abuts against the second bottom wall; and
the elastic portion is a part of the spring between the first abutment portion and the second abutment portion, the first abutment portion has a diameter greater than a diameter of the elastic portion, and the second abutment portion has a diameter greater than the diameter of the elastic portion.

2. The valve apparatus according to claim 1, wherein the spring comprises a first diameter-changing portion and a second diameter-changing portion, the elastic portion is located between the first diameter-changing portion and the second diameter-changing portion, an end portion of the first diameter-changing portion forms the first abutment portion, and an end portion of the second diameter-changing portion forms the second abutment portion.

3. The valve apparatus according to claim 2, wherein
the first diameter-changing portion is composed of a plurality of winding portions, and
the winding portions of the first diameter-changing portion are arranged sequentially and closely along an axial direction of the spring; and
the second diameter-changing portion is composed of a plurality of winding portions, and the winding portions of the second diameter-changing portion are arranged sequentially and closely along the axial direction of the spring.

4. The valve apparatus according to claim 2, wherein
the first diameter-changing portion is composed of a plurality of winding portions, and a preset spacing is provided between every two adjacent winding portions of the first diameter-changing portion; and
the second diameter-changing portion is composed of a plurality of winding portions, and a preset spacing is provided between every two adjacent winding portions of the second diameter-changing portion.

5. The valve apparatus according to claim 4, wherein the preset spacing between the every two adjacent winding portions of the first diameter-changing portion is smaller than a spacing between every two adjacent winding portions of the elastic portion, and the preset spacing between the every two adjacent winding portions of the second diameter-changing portion is smaller than the spacing between the every two adjacent winding portions of the elastic portion.

6. The valve apparatus according to claim 2, wherein a diameter of one part of the first diameter-changing portion away from the elastic portion is greater than that of the other part of the first diameter-changing portion close to the elastic portion.

7. The valve apparatus according to claim 6, wherein the first diameter-changing portion winds around for 2.5 to 3 turns, and the second diameter-changing portion winds around for 2.5 to 3 turns.

8. The valve apparatus according to any one of claims 1 to 7, wherein the spring is helically wound from a single metal wire over a plurality of turns.

9. The valve apparatus according to any one of claims 1 to 7, wherein
a first preset clearance L1 is defined between the first abutment portion and the first hole wall, and L1≤0.1 mm; and
a second preset clearance L2 is defined between the second abutment portion and the second hole wall, and L2≤0.1 mm.

10. The valve apparatus according to any one of claims 1 to 7, further comprising a valve seat, a sleeve, a connection nut, and a seal, wherein
the valve seat is provided with a valve port portion and a connector, a fixing flange is arranged at an end of the sleeve facing the valve seat and extends outward, the connection nut comprises a main body portion and a cooperation portion, and the main body portion is configured to threadedly engage with the connector, so that the fixing flange is clamped between the cooperation portion and the connector; and
the static core is fixed to a side of the sleeve away from the valve seat, the seal is fixed to the movable core, and the movable core is slidably arranged in the sleeve and is configured to drive the seal to be engaged with or disengaged from the valve port portion, so as to close or open the valve port portion.

11. The valve apparatus according to claim 10, wherein
a limiting portion is circumferentially provided at an end of the movable core facing the valve seat, and the limiting portion has a diameter greater than an inner diameter of the sleeve; and
when the seal is in engagement with the valve port portion, a first distance is present between the movable core and the static core, a second distance is present between an upper end face of the limiting portion and a lower end face of the sleeve, and the first distance is larger than the second distance.

12. The valve apparatus according to claim 11, wherein
a buffer pad is further provided on the upper end face of the limiting portion; and
when the seal is in engagement with the valve port portion, a distance between an upper end face of the buffer pad and the lower end face of the sleeve is defined as the second distance.

13. The valve apparatus according to claim 10, wherein
a guide ring is circumferentially arranged on an outer wall of the movable core, the guide ring has an outer diameter greater than a diameter of the movable core, an outer wall of the guide ring is in sliding fit with an inner wall of the sleeve, and a side wall of the guide ring is provided with a gas flow channel running through the guide ring in an axial direction of the guide ring.

14. The valve apparatus according to claim 13, wherein the guide ring is provided with a gap running through the guide ring in the axial direction of the guide ring, and the gap forms the gas flow channel.

15. The valve apparatus according to claim 13, wherein the number of the guide ring is two, and the two guide rings are spaced apart in an axial direction of the movable core.

16. The valve apparatus according to claim 13, wherein the outer wall of the movable core is further provided with a first mounting groove extending in a circumferential direction of the movable core, and the first mounting groove is configured to mount the guide ring.

17. The valve apparatus according to claim 10, wherein an outer wall of the movable core is further provided with an annular groove extending in a circumferential direction of the movable core.

18. The valve apparatus according to claim 10, wherein
a second mounting groove is provided at a bottom of the movable core, and the second mounting groove is configured to mount the seal; and
a groove wall at an opening end of the second mounting groove is provided with a rim extending inward in a radial direction, and the rim abuts against a bottom wall of the seal.

19. The valve apparatus according to claim 10, wherein the fixing flange has an annular structure, and an annular sealing ring is circumferentially sandwiched between the fixing flange and the connector.
